# EUROPÄISCHE PATENTSCHRIFT

(11) **EP 0 901 990 B1**
(45) Veröffentlichungstag und Bekanntmachung des Hinweises auf die Patenterteilung: **06.02.2002**
(21) Anmeldenummer: 98115229.1
(22) Anmeldetag: 13.08.1998
(51) Int. Cl.: C03C 3/093

(54) **Alkalifreies Aluminosilicatglas**
Alkali-free aluminoborosilicate glass
Verre aluminoborosilicate exempt de métaux alcalins

(30) Priorität: 11.09.1997 DE 19739912
(43) Veröffentlichungstag der Anmeldung: 17.03.1999
(73) Patentinhaber: Schott Glas, 55122 Mainz (DE); CARL-ZEISS-STIFTUNG, 55122 Mainz (DE)
(72) Erfinder: Lautenschläger, Gerhard Dr., 07743 Jena (DE); Kloss, Thomas, 07745 Jena (DE); Schneider, Klaus, 99510 Apolda (DE); Brix, Peter Dr., 55116 Mainz (DE)

(56) Entgegenhaltungen:
- EP-A- 0 672 629
- EP-A- 0 787 693
- DE-A- 19 601 922
- DE-C- 19 617 344
- PATENT ABSTRACTS OF JAPAN vol. 098, no. 008, 30. Juni 1998 & JP 10 072237 A (ASAHI GLASS CO LTD), 17. März 1998
- PATENT ABSTRACTS OF JAPAN vol. 097, no. 006, 30. Juni 1997 & JP 09 048632 A (NIPPON ELECTRIC GLASS CO LTD), 18. Februar 1997 -& JP 09 048632 A
- PATENT ABSTRACTS OF JAPAN vol. 097, no. 003, 31. März 1997 & JP 08 295530 A (NIPPON ELECTRIC GLASS CO LTD), 12. November 1996 -& JP 08 295530 A

## Beschreibung

Gegenstand der Erfindung ist ein alkalifreies Aluminoborosilicatglas für den Einsatz in der Displaytechnik.

Die Anforderungen an ein Glas, welches in der Displaytechnik, z.B. als Frontscheibe für einen flachen Bildschirm, eingesetzt werden soll, sind ausführlich von W. H. Dumbaugh, P. L. Bocko und F. P. Fehlner ("Glasses for flat-panel displays" in "High-Performance Glasses", hrsg. von M. Cable und J. M. Parker, Blackie and Son Limited, Glasgow und London, 1992) beschrieben worden. Die derzeit verfügbaren Gläser für derartige Anwendungen sind auch in dem Artikel "Advanced glass substrates for flat panel displays" von J. C. Lapp, P. L. Bocko und J. W. Nelson, Corning Research 1994 zusammengestellt. Die Güte der für Flachglassubstrate nötigen Eigenschaften, die maßgeblich die Präzision der Abbildungseigenschaften eines Systems beeinflussen, ergibt sich zum einen direkt aus der Glaszusammensetzung und zum anderen aus den Herstellungs-, Verarbeitungs-und Formgebungsverfahren und deren Vermögen, bestimmte Eigenschaften der Gläser wie Dickenprofil- und Ebenheitsparameter einzustellen, wobei die Verwendbarkeit der Verfahren häufig wieder durch die Glaszusammensetzung bzw. durch Glaseigenschaften limitiert ist.

Borosilicatgläser spielen bei einer Vielzahl von technisch orientierten Glasapplikationen eine herausragende Rolle. Besonders zeichnen sie sich durch hohe Temperaturwechsel- und Temperaturunterschiedsfestigkeit, geringe thermische Ausdehnung und gute Resistenz gegenüber aggressiven Reagenzien und Medien aus.
Damit sind Borosilicatgläser prinzipiell auch für den Einsatz als Substratglas in der Displaytechnik interessant, jedoch erfordert der Display-Herstellungsprozeß, beispielsweise für Active Matrix Liquid Displays (AMLCD), sowie die gewünschte Anwendung ein ganz spezielles Eigenschaftsprofil der Gläser:
- ein an polykristallines Silicium angepaßter thermischer Ausdehnungskoeffizient: α_{20/300} *=* 3,5-3,8x10⁶/K.
- eine Temperatur bei der Viskosität 10^{14,5} dPas von wenigstens 650°C zur Sicherung einer hohen thermischen Prozeß- und Formstabilität des Glases während der Herstellung, insbesondere eines geringen Kompaktionsverhaltens (compaction, Schrumpf) des Glases in der Abkühlphase.
- eine alkalifreie Glaszusammensetzung, wobei ein Maximalgehalt an Alkalioxiden von Σ R₂O = 1000 ppm tolerierbar ist, um eine Vergiftung der mikrostrukturierten Dünnfilm-Transistoren durch in die Halbleiterschicht eindiffundierende Alkaliionen zu vermeiden.
- eine ausreichende chemische, d.h. hydrolytische, Säure- und Alkali-Beständigkeit gegenüber den beim Mikrostrukturierungsprozeß eingesetzten Reagenzien und Medien.
- eine relativ geringe Dichte, d.h. ρ ≤ 2,60 g/cm³ um insbesondere bei großen Bildschirmformaten das Gesamtgewicht des Displays gering zu halten.

Darüber hinaus muß die visuelle Qualität der Glasscheiben, d.h. die Qualität bezüglich der Abwesenheit von kristallinen Einschlüssen, Knoten und Blasen sehr gut sein.

Dieses komplexe und umfangreiche Anforderungsprofil wird am ehesten durch Borosilicatgläser aus der Subfamilie der Erdalkali-Aluminoborosilicatgläser erfüllt. Die bekannten und kommerziell erhältlichen Gläser für TFT-AMLCD- Anwendungen gehören zu dieser Glasart; und so sind auch die Gläser der nachfolgend diskutierten Patentschriften bzw. -anmeldungen Vertreter dieser Gruppe. Jedoch weisen alle derzeit bekannten Gläser für Display-Anwendungen noch Nachteile auf und erfüllen nicht den gesamten Anforderungskatalog:

In der Patentschrift US 5,506,180 werden thermisch stabile und chemisch beständige Gläser u.a. für den Einsatz als TFT-Display-Glas beschrieben. Aufgrund der hohen B₂O₃-Gehalte von 10% und mehr und der relativ niedrigen SiO₂-Anteile (46-56%) sind solche Gläser nicht ausreichend beständig gegen Salzsäure. Auch ihre Beständigkeit gegen flußsäurehaltige Lösungen ist nur mäßig. Die Anpassung der thermischen Ausdehnung an polykristallines Silicium ist unzureichend. Die Verarbeitungstemperaturen V_{A} von weniger als 1150°C sind zu niedrig, um alternativ zum Floatprozeß auch Ziehverfahren wie das Microsheet-Down-Draw-Verfahren oder das Overflow-Fusion-Verfahren anwenden zu können. Auch die angegebenen unteren Kühltemperaturen (Strain point) von 642°C und weniger sind zu niedrig, um eine geringe "compaction" sicher zu stellen.

Die europäische Patentschrift EP 510 544 B1 beschreibt alkalifreie Gläser, die im Floatprozeß darstellbar sind und u.a. als Substrat für verschiedene Displays und Photomasken verwendet werden. Die Gläser sind BaO-und MgO-frei und besitzen nur geringe B₂O₃-Anteile. ihre thermische Ausdehnung genügt mit 4,5-6,0x10⁻⁶/K nicht mehr den Anforderungen an hochwertige und sehr gut an polykristallines Silicium angepaßte TFT-Displaygläser.

Die Patentschrift EP 527 320 B1 beschreibt Flachdisplay-Anzeigevorrichtungen mit einem Strontiumaluminosilicat-Glassubstrat. Die Glaszusammensetzungen für Gläser mit hoher Entglasungsstabilität scheinen speziell auf die Eignung zur Darstellung im Overflow-Fusion-Ziehverfahren ausgerichtet zu sein. Die Dichte der Gläser und ihr thermischer Ausdehnungskoeffizient sind zu hoch.

In der japanischen JP 8-295530 A werden alkalifreie Glassubstrate beschrieben, deren Beständigkeit gegenüber Salzsäure aufgrund des hohen B₂O₃-Gehaltes (bis zu 15 Gew.-%) gering sein wird.

Auch in den PCT-Anmeldungen WO 97/11919 und WO 97/11920 werden alkalifreie Glassubstrate beschrieben. Sie sind MgO -frei bzw. -arm. Sie können jeweils bis zu 5 Gew.-% ZnO und TiO₂ enthalten. ZnO kann durch seine Neigung zur Verdampfung aus der Glasoberfläche im Floatbad und anschließender Kondensation Glasfehler verursachen. Der mögliche hohe Gehalt an TiO₂ wird bei Verwendung von herkömmlichen Rohstoffen einen braunen Farbstich in den Gläsern bewirken, da das in üblichen Rohstoffen immer vorhandene Fe³⁺ mit Ti⁴⁺ einen braunen Farbkomplex bildet.

In der europäischen Patentanmeldung EP 714 862 A1 werden alkalifreie Gläser für den TFT-Flachdisplay-Einsatz beschrieben. Die Ausführungsbeispiele zeigen recht gute Display-Kennwerte, beispielsweise bzgl. der thermischen Ausdehnung, der unteren Kühltemperatur oder der HCI-Beständigkeit. Jedoch ist das Viskositätsverhalten der Gläser für das angeblich geeignete Herstellungsverfahren "Floaten" nicht günstig, wie die Fixpunkttemperaturen T (log η = 4) = 1310-1350 °C und T (log η = 2) = 1710-1810°C zeigen, die technologisch das Float- sowie das Schmelz- und Läuterverhalten entscheidend beeinflussen und zu hoch sind. Für derart hochviskose Aluminosilicatgläser mit hohen SiO₂ -Gehalten ist eine effiziente Läuterung äußerst problematisch. Daher werden die Gläser die geforderten hohen Anforderungen bzgl. der visuellen Qualität nicht aufweisen.

EP 672 629 A2 bzw. US 5,508,237 beschreiben Aluminosilicatgläser für Flachdisplays. Sie zeigen verschiedene Zusammensetzungsbereiche mit verschiedenen thermischen Ausdehnungskoeffizienten. Diese Gläser sollen angeblich nicht nur mit dem Overflow-Fusion-Ziehverfahren, sondern auch mit anderen Flachglasherstellungsverfahren verarbeitbar sein. Jedoch werden insbesondere die Gläser, die eine an polykristallines Si angepaßten thermischen Ausdehnungskoeffizienten haben, sehr hohe Verarbeitungstemperaturen V_{A} aufweisen, die sie für den Floatprozeß ungeeignet machen. Wie bei den bisher beschriebenen Gläsern wird auch hier die visuelle Qualität nicht hoch sein, da kein Weg zu einer effektiven, insbesondere einer floatverträglichen Läuterung, gezeigt wird. Die beispielhaft genannten Läutermittel Sb₂O₃ und As₂O₃ sind aufgrund ihrer leichten Reduzierbarkeit für den Floatprozeß ungeeignet. Gleiches gilt für die optionalen Glaskomponenten Ta₂O₅ und Nb₂O₅.

Auch bei den alkalifreien Glassubstraten für TFT-AMLCD aus der JP 9-48632 A wird die visuelle Qualität nicht hoch sein, da lediglich SiO₂, B₂O₃, MgO und BaO im Glas vorhanden sein müssen.

In der deutschen Patentschrift DE 38 08 573 C2 werden alkalifreie, SnO₂ -haltige Aluminosilicatgläser beschrieben, die gut schmelzbar und kostengünstig läuterbar sind. Die Gläser zeigen eine hohe chemische Beständigkeit. Sie werden als Photomaskenglas verwendet. Ihr thermisches Ausdehnungsverhalten ist mit 4.0x10⁻⁶/K noch nicht optimal an das von polykristallinem Si angepaßt. Durch ihre B₂O₃ -Freiheit bei gleichzeitig hohem Al₂O₃-Gehalt haben die Gläser einen für Flachglasherstellungsprozesse ungünstigen Temperatur-Viskositäts- Verlauf.

Die deutsche Patentschrift der Anmelderin DE 1.96 17 344 C1 beschreibt ebenfalls alkalifreie, SnO₂-haltige Gläser. Die Gläser besitzen einen relativ niedrigen SiO₂-Anteil und einen hohen Al₂O₃-Gehalt. Mit einem thermischen Ausdehnungskoeffizienten von ca. 3,7x10⁻⁶/K und einer sehr guten chemischen Beständigkeit sind diese Gläser geeignet für den Einsatz in der Displaytechnik. Es besteht jedoch noch Verbesserungsbedarf hinsichtlich einer wirtschaftlichen Darstellbarkeit im Float- und auch im Ziehverfahren, d.h. also hinsichtlich einer "universellen" Darstellbarkeit. Dies gilt auch für die Gläser aus der deutschen Patentschrift der Anmelderin DE 196 036 98 C1.

Es ist Aufgabe der Erfindung, Gläser bereitzustellen, die die genannten physikalischen und chemischen Anforderungen an moderne TFT-Displayglassubstrate erfüllen, Gläser, die einen prozeßgünstigen Verarbeitungstemperaturbereich sowie eine hohe Entglasungsstabilität aufweisen, so daß für ihre Herstellung -je nach spezifischem Anforderungsprofil für die unterschiedlichen TFT-Display-Typen-verschiedene Flachglas-Darstellungsverfahren, wie Floatverfahren oder Ziehverfahren (Up-draw- und verschiedene Down-draw-Verfahren) zur Anwendung kommen können. Damit werden auch die herstellbaren Dicken variabel in Bereich zwischen 30 µm und einigen mm. Solche Gläser müssen gut schmelzbar und läuterbar sein und sollten deshalb relativ niedrige Temperaturen bei der Viskosität von 10^{2,0} dPas aufweisen, d.h. Temperaturen von 1600-1630°C.

Die Bildung von leicht flüchtigen Boratverbindungen wie Zinkborat, Bleiborat, Bariumaluminoborat, die die innere Glasqualität beeinträchtigen können, soll vermieden werden oder zumindest minimiert werden.

Zur Herstellung von Microsheet-Scheiben im Dickenbereich zwischen 30 und 50 µm nach dem Microsheet-Down-Draw-Verfahren (MDD- Verfahren) sollten die Gläser gleichzeitig eine sehr hohe Entglasungsfestigkeit und bestimmte Verarbeitungstemperaturen V_{A} besitzen:
Geeignete Verarbeitungstemperaturen sind Temperaturen bei der Viskosität von 10⁴ dPas von 1230 bis 1260°C. Eine Kenngröße für die Entglasungsstabilität bzw. Kristallisationsstabilität ist die maximale Kristallwachstumsgeschwindigkeit vₘₐₓ [µm/h]. Sie gibt das größte beobachtete Längenwachstum der gebildeten Kristalle an: Bei einer Auftragung der Wachstumsgeschwindigkeit v der Kristalle gegen die Temperatur T entspricht vₘₐₓ der Wachstumsgeschwindigkeit bei der Temperatur des maximalen Kristallwachstums, bei KGₘₐₓ. Je kleiner vₘₐₓ ist, desto weniger kristallines Volumen wird gebildet. Dieses vₘₐₓ sollte hier nicht mehr als 10 µm/h betragen.

Zur Herstellung von Glasscheiben für Display-Anwendungen im Microfloat-Verfahren, insbesondere von großformatigen, soll die Temperatur bei der 10⁴ dPas-Viskosität zwischen 1230 und 1280°C betragen. Leicht reduzierbare Glaskomponenten wie As₂O₃, Sb₂O₃, P₂O₅, Bi₂O₃, PbO, CdO und auch ZnO sollten nicht in der Glaszusammensetzung enthalten sein, weil sie unter den reduzierenden Bedingungen im Floatbad zum elementaren Zustand reduziert werden können und einen grauen metallischen Oberflächenspiegel oder andere Mikrooberflächendefekte erzeugen können. Die Anforderungen an die Kristallisations-beständigkeit sind hier nicht so hoch wie beim genannten MDD-Verfahren. So ist ein vₘₐₓ von ≤ 30 µm/h noch ausreichend.

Für die Herstellung von sehr planen Dünnglasscheiben mit Dicken zwischen 0,5 und 1,1 mm im Overflow-Fusion-Verfahren, einem Down-Draw-Verfahren sollte das Glas eine besonders hohe Entglasungsstabilität aufweisen, d.h. ein vₘₐₓ von höchstens 10 µm/h, vorzugsweise sogar nur von höchstens 5 µm/h, sowie eine Liquidustemperatur oder Obere Entglasungsgrenze (OEG), d.i. die Temperatur, bei der sich eventuell gebildete Kristalle wieder auflösen, möglichst weit unterhalb der Verarbeitungstemperatur V_{A}. V_{A} darf hier zwischen 1240 und 1320°C betragen. Nach dem Stand der Technik ist für solche Gläser V_{A} eher hoch, um eine große Differenz V_{A}-OEG zu erreichen. Dies ist aber insofern nachteilig, als eine hohe Verarbeitungstemperatur die Primärenergiekosten bei der Glasherstellung erhöht und die Korrosion der Feuerfestmaterialien fördert. Erstrebenswert ist also eine niedrige Obere Entglasungsgrenze.

Unabhängig von den hier diskutierten Verfahren sollte V_{A} 1280°C möglichst nicht überschreiten.

Die oben genannte Aufgabe wird durch ein Glas gemäß Patentanspruch 1 gelöst.

Erfindungsgemäß liegen die drei glasbildnerischen Komponenten SiO₂, B₂O₃ und Al₂O₃ in eng definierten Gehalten, also auch in einem engen Verhältnis zueinander vor: Der SiO₂-Anteil ist relativ hoch, nämlich wenigstens 57 Gew.-%, aber höchstens 60 Gew.-%. Der B₂O₃-Gehalt ist eher gering und beträgt wenigstens 6,5 Gew.-% und höchstens 9,5 Gew.-%. Bevorzugt ist eine Beschränkung auf weniger als 9 Gew.-%. Der Al₂O₃-Gehalt soll lediglich zwischen 14 und 17,5, bevorzugt zwischen 14 und 17 Gew.-% variieren. Nur so können die gewünschten niedrigen thermischen Ausdehnungskoeffizienten α_{20/300} im Bereich von 3,5 bis 3,8x10⁻⁶/K bei gleichzeitig geringer Dichte ρ von höchstens 2,6 g/cm³ erreicht werden. Aufgrund der wechselseitigen Beeinflussung von B₂O₃ und Al₂O₃ in der Glasstruktur kann nur im genannten engen Bereich des B₂O₃ -Gehaltes die gewünschte gute chemische und Kristallisations-Beständigkeit erzielt werden. Niedrigere B₂O₃-Gehalte erhöhen die Entglasungsneigung und erhöhen die thermische Ausdehnung durch direkte Beeinflussung der Al-Koordination, wo der Anteil an fünf- und sechsfach koordiniertem Aluminium zunimmt. Bei zu hohem Gehalt an B₂O₃ und Al₂O₃ nimmt die Beständigkeit gegen Salzsäure ab.

Erdalkalioxide liegen im Glas zu insgesamt wenigstens 15 Gew.-% vor. Bei einem geringeren Anteil wären die Temperaturen bei den im Schmelz- und Formgebungsbereich benötigten Viskositäten zu hoch. Ein ausgewogenes Verhältnis zwischen kleinen Kationen und großen Kationen der Erdalkalioxide, wobei der Zahl der kleinen Kationen überwiegen soll, wirkt sich positiv auf die Verarbeitungstemperatur aus. Daher enthält das Glas 5-8 Gew.-% MgO und 0-3,5 Gew.-% BaO, wobei ein Vorhandensein von 2-3,5 Gew.-% BaO bevorzugt ist, sowie 1-4 Gew.-% CaO und 5-8 Gew.-% SrO. Der Gesamtanteil an MgO, CaO, SrO und BaO soll dabei auf 17 Gew.-% beschränkt bleiben, da ansonsten die chemische Beständigkeit wieder abnimmt.
Die Verwendung von SrO ist gegenüber BaO bevorzugt, um die Dichte der Gläser gering zu halten. Würde auf die schweren Oxide BaO und SrO ganz verzichtet bzw. wäre ihr Anteil zu gering, so würde die Entglasungsneigung zunehmen und würden die Transformationstemperatur sowie die Temperatur bei der Viskosität von 10^{14,5} dPas sinken. Bei zu hohen Anteilen an BaO und SrO würde die Verabeitungstemperatur unakzeptabel hoch. Die BaO-freien und BaO-armen Gläser werden bevorzugt in Floatverfahren verarbeitet, während die höher BaO-haltigen Gläser vorzugsweise in Ziehverfahren verarbeitet werden.
Das Glas ist bis auf unvermeidliche Verunreinigungen frei von ZnO sowie von Alkalioxiden.

Weiter enthält das Glas 0,4-1,5 Gew.-% ZrO₂. ZrO₂ verbessert die chemische Beständigkeit. Sein Maximalgehalt ist durch seine Schwerlöslichkeit begrenzt.
Außerdem enthält das Glas 0,4-1 Gew.-% TiO₂. Dadurch wird die sonst oft beobachtete Solarisationsneigung der Aluminoborosilicatgläser, d.h. die Abnahme der Transmission im sichtbaren Wellenlängenbereich aufgrund von UV-VIS-Strahlung, minimiert.
Besonders wirkungsvoll ist hierbei die Kombination von TiO₂ mit SnO₂, das im Glas im Redoxgleichgewicht SnO₂/SnO vorliegt. Durch das Vorhandensein von 0,2-1 Gew.-%, berechnet und eingesetzt als SnO₂, werden die bei Verwendung üblicher Rohstoffe unvermeidlichen Fe³⁺-Ionen reduziert. Daher tritt die sonst bei TiO₂-haltigen Gläsern häufige transmissionsmindernde Gelb-Färbung, die auf auf einem Fe³⁺-haltigen Ti-Komplex beruht, nicht auf. So werden also Gläser erhalten, die bei Verwendung als Substratgläser für Anzeigevorrichtungen auch nach längerem Gebrauch eine gute Bildhelligkeit gewährleisten.
Erfindungswesentlich ist neben dem genannten SnO₂ -Gehalt das Vorhandensein von 0,1-0,5 Gew.-% CeO₂:
Durch die Kombination von SnO₂ mit CeO₂ wird das Redoxgleichgewicht SnO₂/SnO stabilisiert und wird eine für Aluminoborosilicatgläser außergewöhnlich gute Läuterwirkung erzielt, so daß die erfindungsgemäßen Gläser die geforderte hohe visuelle Qualität aufweisen. Außerdem stabilisieren SnO₂ und CeO₂ in Verbindung mit ZrO₂ die chemische Beständigkeit der Gläser. Bei höheren CeO₂ - Gehalten nimmt die UV-Absorption zu und verschiebt sich die Absorptionskante in den VIS-Bereich.

U.a. weil also auf die Läutermittel As₂O₃ und Sb₂O₃ verzichtet werden kann und die Gläser bis auf unvermeidliche Verunreinigungen sowohl frei von diesen Komponenten als auch von anderen leicht reduzierbaren Bestandteilen sind, sind diese Gläser nicht nur mit verschiedenen Ziehverfahren, sondern auch mit dem Floatverfahren verarbeitbar. Soll das letztgenannte Verfahren nicht zum Einsatz kommen, so kann das Glas als zusätzliche(s) Läutermittel bis zu 1,5 Gew.-% As₂O₃ und/oder Sb₂O₃ enthalten. Auch der Zusatz von je 1,5 Gew.-% Cl⁻ (beispielsweise als BaCl₂), F⁻ (z.B. als CaF₂) oder SO₄²⁻ (z.B. als BaSO₄) ist möglich. Die Summe aus As₂O₃, Sb₂O₃, Cl⁻, F⁻ und SO₄²⁻ soll jedoch 1,5 Gew.-% nicht überschreiten.

### Ausführungsbeispiele:

Aus herkömmlichen Rohstoffen wurden bei 1620 °C Gläser in Tiegeln aus SiO₂ - Keramik erschmolzen, die Schmelze wurde anderthalb Stunden bei dieser Temperatur geläutert, anschließend in induktiv beheizte Platintiegel umgegossen und zur Homogenisierung 30 Minuten bei 1550 °C gerührt.
Die Tabellen zeigen in den Beispielen 1 bis 5 (Tabelle 1) erfindungsgemäße Gläser mit ihren Zusammensetzungen und ihren wichtigsten Eigenschaften sowie in den Vergleichsbeispielen A bis J (Tabelle 2) nicht erfindungsgemäße Gläser. Die verschiedenen chemischen Beständigkeiten werden folgendermaßen angegeben: Allseitig polierte Glasplättchen der Abmessungen 70mm × 50mm × 2mm werden für die angegebene Zeitdauer bei der angegebenen Temperatur mit der jeweiligen Lösung behandelt, und der Gewichtsverlust (Abtragswert) wird bestimmt und in mg/cm² angegeben.
- H₂O: Behandlung mit Wasser für 24 Stunden bei 95 °C.
- HCl: Behandlung mit 5%iger Salzsäure für 24 Stunden bei 95 °C.
- NaOH: Behandlung mit 5%iger Natronlauge für 6 Stunden bei 95 °C.
- "BHF": Behandlung mit 10%iger Flußsäurelösung für 20 Minuten bei 20 °C.

Als Kenngrößen für die Kristallisationsneigung (Entglasungsneigung) bzw. - stabilität sind die Obere Entglasungsgrenze (Liquidustemperatur) OEG und die maximale Kristallwachstumsgeschwindigkeit vₘₐₓ angegeben.
Die Temperaturen für die Viskositäten 10^{14,5} dPas, 10¹³ dPas, 10^{7,6} dPas, 10⁴ dPas und 10² dPas sind in den Tabellen als T 14,5; T 13; T 7,6; T 4 und T 2 bezeichnet.
Als weitere Eigenschaften der Gläser sind angegeben die Transformationstemperatur Tg, der thermische Ausdehnungskoeffizient α_{20/300} [10⁻⁶/K] und die Dichte ρ [g/cm³].

**Tabelle 1**

| Beispiele: Zusammensetzungen (in Gew.-% auf Oxidbasis) und wesentliche Eigenschaften von erfindungsgemäßen Gläsern. | | | | | |
|---|---|---|---|---|---|
| | 1 | 2 | 3 | 4 | 5 |
| SiO₂ | 57,0 | 58,8 | 58,6 | 59,0 | 59,5 |
| B₂O₃ | 8,0 | 8,5 | 8,5 | 8,0 | 7,5 |
| Al₂O₃ | 17,0 | 15,0 | 15,0 | 15,0 | 15,0 |
| MgO | 5,0 | 6,0 | 6,0 | 6,0 | 6,0 |
| CaO | 2,0 | 2,0 | 2,0 | 2,0 | 2,0 |
| BaO | 3,3 | 2,0 | 2,0 | 2,3 | 2,3 |
| SrO | 6,0 | 6,0 | 6,0 | 6,0 | 6,0 |
| ZrO₂ | 0,5 | 0,5 | 0,5 | 0,5 | 0,5 |
| SnO₂ | 0,5 | 0,5 | 0,5 | 0,5 | 0,5 |
| TiO₂ | 0,5 | 0,4 | 0,4 | 0,5 | 0,5 |
| CeO₂ | 0,2 | 0,5 | 0,5 | 0,2 | 0,2 |
| | | | | | |
| ρ [g/cm³] | 2,56 | 2,54 | 2,53 | 2,54 | 2,55 |
| α_{20/300} [10⁻⁶/K] | 3,7 | 3,7 | 3,7 | 3,7 | 3,7 |
| Tg [°C] | 715 | 704 | 702 | 708 | 715 |
| T2 [°C] | 1605 | 1603 | 1601 | 1610 | 1612 |
| T4 [°C] | 1254 | 1244 | 1245 | 1252 | 1256 |
| T7,6 [°C] | 939 | 929 | 938 | 936 | 939 |
| T13 [°C] | 724 | 716 | 725 | 724 | 722 |
| T14,5 [°C] | 667 | 663 | 667 | 666 | 665 |
| OEG [°C] | 1150 | 1210 | 1230 | 1210 | 1160 |
| vₘₐₓ [µm/h] | 4,5 | 8,8 | 10,0 | 7,3 | 8,9 |
| H₂O [mg/cm²] | 0,02 | 0,02 | 0,02 | 0,01 | 0,01 |
| HCl[mg/cm²] | 1,0 | 0,9 | 1,0 | 0,8 | 0,6 |
| NaOH [mg/cm²] | 1,0 | 1,0 | 1,0 | 1,0 | 0,7 |
| "BHF" [mg/cm²] | 0,7 | 0,6 | 0,6 | 0,6 | 0,6 |

**Tabelle 2**

| Vergleichsbeispiele: Zusammensetzungen (in Gew.-% auf Oxidbasis) und Eigenschaften von nicht erfindungsgemäßen Gläsern | | | | | | | | | | |
|---|---|---|---|---|---|---|---|---|---|---|
| | A | B | C | D | E | F | G | H | I | J |
| SiO₂ | 57,0 | 55,8 | 59,0 | 59,5 | 59,5 | 59,5 | 59,5 | 58,0 | 59,8 | 58,8 |
| B₂O₃ | 5,0 | 10,0 | 5,0 | 5,0 | 5,0 | 5,0 | 5,0 | 4,0 | 9,3 | 8,0 |
| Al₂O₃ | 18,0 | 18,0 | 15,0 | 15,0 | 15,0 | 15,0 | 15,0 | 18,0 | 14,5 | 15,0 |
| MgO | 8,0 | 5,0 | 2,0 | 10,0 | 5,0 | 5,0 | 6,0 | 6,0 | 2,0 | 7,5 |
| CaO | 2,0 | 2,0 | 10,0 | 2,0 | 7,0 | 7,0 | 8,0 | 8,0 | 2,0 | 8,5 |
| BaO | 6,0 | 2,0 | 5,0 | 1,0 | 1,0 | 3,0 | 2,0 | 2,0 | 7,0 | - |
| SrO | 3,0 | 6,0 | 3,0 | 5,5 | 5,5 | 3,5 | 2,5 | 2,0 | 4,0 | - |
| ZrO₂ | - | 0,5 | - | 1,0 | 1,0 | 1,0 | 1,0 | 1,0 | 0,5 | 1,0 |
| SnO₂ | 1,0 | 0,5 | 1,0 | 1,0 | 1,0 | 1,0 | 1,0 | 1,0 | 0,2 | 1,0 |
| TiO₂ | - | - | - | - | - | - | - | - | 0,5 | - |
| CeO₂ | - | 0,2 | - | - | - | - | - | - | 0,2 | 0,2 |
| | | | | | | | | | | |
| ρ [g/cm³] | 2,61 | 2,54 | 2,61 | 2,59 | 2,59 | 2,59 | 2,58 | 2,60 | 2,53 | 2,53 |
| α_{20/300} [10⁻⁶/K] | 4,0 | 3,6 | 4,5 | 4,0 | 4,2 | 4,2 | 4,1 | 4,1 | 3,6 | 3,8 |
| Tg [°CJ | 738 | 717 | 726 | 736 | 722 | 724 | 727 | 735 | 704 | 690 |
| T2 [°C] | | | | | | | | | >1700 | |
| T4 [°C] | | 1254 | | | 1230 | 1234 | 1215 | 1224 | 1316 | 1204 |
| T7,6 [°C] | | 942 | | | | | 915 | 921 | 959 | 901 |
| T13 [°C] | | 729 | | | | | 716 | 710 | 714 | 698 |
| T14,5 [°C] | | 670 | | | | | 665 | 661 | 660 | 645 |
| OEG [°C] | >1250 | 1150 | >1250 | >1250 | >1250 | >1250 | >1250 | >1250 | 1150 | 1240 |
| vₘₐₓ [µm/h] | 51 | 4,4 | 28 | 40 | 38 | 35 | 50 | 62 | 4,4 | 16 |
| H₂O [mg/cm²] | 0,02 | 0,02- | 0,02 | 0,02 | 0,02 | 0,02 | 0,02 | 0,02 | 0,01 | 0,02 |
| HCl [mg/cm²] | 0,3 | 2,3 | 0,2 | 0,2 | 0,2 | 0,2 | 0,2 | 0,1 | 0,4 | 0,9 |
| NaOH [mg/cm²] | 0,6 | 1,1 | 0,7 | 0,7 | 0,7 | 0,7 | 0,6 | 0,5 | 1,2 | 1,0 |
| "BHF" [mg/cm²] | 0,1 | 0,7 | 0,1 | 0,1 | 0,1 | 0,1 | 0,1 | 0,1 | 0,5 | 0,6 |

Auch die Gläser aus den Vergleichsbeispielen besitzen jeweils einzelne sehr gute Eigenschaften, jedoch erfüllt-im Gegensatz zu den erfindungsgemäßen Gläsern-keines der Vergleichsgläser das gesamte Anforderungsprofil an ein Displaysubstratglas für TFT-Anwendungen: zu geringe B₂O₃-Anteile verringern die Entglasungsstabilität und setzen die thermische Ausdehnung herauf (Beispiele A, C-H). Ein zu hoher Gehalt an B₂O₃ und Al₂O₃ setzt die Beständigkeit gegen Salzsäure herab (Beispiel B). Beispiel I und Beispiel J verdeutlichen die Notwendigkeit eines ausgewogenen Verhältnisses von kleinen Erdalkaliionen zu großen: Bei einer "richtigen" Gesamtmenge an Erdalkalioxiden, aber zu wenig MgO und zuviel BaO (Beispiel I), ist die Verarbeitungstemperatur sehr hoch, speziell zur Verarbeitung im Floatprozeß zu hoch. Beim Fehlen von sowohl BaO als auch SrO (Beispiel J) ist Vₘₐₓ recht hoch und liegt die Liquidustemperatur oberhalb der Verarbeitungstemperatur.

Dagegen vereinen die erfindungsgemäßen Gläser mit ihrem eng definierten Zusammensetzungsbereich sämtliche diskutierten Eigenschaften in sich:
- Ihr thermischer Ausdehnungskoeffizient α_{20/300} ist sehr gut an polykristallinen Silicium angepaßt.
- Ihre Dichte ist sehr gering.
- ihre chemische Beständigkeiten sind ausgezeichnet.
- Sie besitzen eine ausreichende Solarisationsstabilität.
- Sie besitzen günstige Verarbeitungstemperaturen (V_{A} ≤ 1280 °C)
- Die Temperatur bei der Viskosität von 10^{14,5} dPas beträgt wenigstens 650 °C.
- Die Gläser sind alkalifrei.
- Die Gläser besitzen eine sehr gute Kristallisationsbeständigkeit.
- Die Gläser lassen sich aufgrund ihres Temperatur-Viskositätsverlauf und ihrer geringen Kristallisationsneigung, solange sie frei von leicht reduzierbaren Bestandteilen sind, sowohl mit den verschiedenen Ziehverfahren als auch mit dem Floatverfahren verarbeiten. Es versteht sich jedoch, daß ein konkretes Glas aus dem erfindungsgemäßen Zusammensetzungsbereich aufgrund seines ganz speziellen Eigenschaftsprofils für das eine Verfahren noch besser geeignet ist als für das andere. Dem Fachmann ist es leicht möglich, aufgrund der hier gemachten Angaben das für die jeweilige Anwendung und die speziellen Bedürfnisse optimale Glas auszuwählen.
- Die Gläser besitzen aufgrund der ausgewogenen Kombination an Bestandteilen, insbesondere an Läutermitteln, eine sehr gute visuelle Qualität.

## Patentansprüche

1. Alkalifreies Aluminoborosilicatglas, das folgende Zusammensetzung (in Gew.-% auf Oxidbasis) aufweist:
| | |
|---|---|
| SiO₂ | 57 - 60 |
| B₂O₃ | 6,5 - 9,5 |
| Al₂O₃ | 14 - 17,5 |
| MgO | 5-8 |
| CaO | 1 - 4 |
| SrO | 5-8 |
| BaO | 0 - 3,5 |
| mit MgO + CaO + SrO + BaO 15 - 17 | |
| ZrO₂ | 0,4 - 1,5 |
| TiO₂ | 0,4 - 1 |
| CeO₂ | 0,1 - 0,5 |
| SnO₂ | 0,2 - 1 |

2. Auf einer Floatanlage herstellbares Aluminoborosilicatglas nach Anspruch 1,
**dadurch gekennzeichnet,**
**daß** es bis auf unvermeidliche Verunreinigungen frei ist von Arsenoxid und Antimonoxid.

3. Aluminosilicatglas nach Anspruch 1,
**dadurch gekennzeichnet,**
**daß** es zusätzlich enthält:
| | |
|---|---|
| As₂O₃ | 0 - 1,5 |
| Sb₂O₃ | 0 - 1,5 |
| Cl⁻ | 0 - 1,5 |
| F⁻ | 0-1,5 |
| SO₄²⁻ | 0 - 1,5 |
| mit As₂O₃ + Sb₂O₃ + Cl⁻ + F⁻ + SO₄²⁻ ≤ 1,5 | |

4. Aluminoborosilicatglas nach wenigstens einem der Ansprüche 1 bis 3, das einen thermischen Ausdehnungskoeffizienten α_{20/300} zwischen 3,5 und 3,8x10⁻⁶/K, eine Temperatur bei der Viskosität 10^{14,5} dPas von wenigstens 650°C, eine Temperatur bei der Viskosität 10⁴ dPas von ≤ 1280°C, eine Dichte ρ von höchstens 2,60 g/cm³ und einen Gewichtsverlust von höchstens 1,0 mg/cm² nach 24 stündiger Behandlung in 5%-iger Salzsäure bei 95°C aufweist.

5. Verwendung des Aluminoborosilicatglases nach wenigstens einem der Ansprüche 1 bis 4 als Substratglas in der Displaytechnik.

## Claims

1. Alkali metal-free aluminoborosilicate glass, which has the following composition (in % by weight based on oxide):
| | |
|---|---|
| SiO₂ | 57 - 60 |
| B₂O₃ | 6.5 - 9.5 |
| Al₂O₃ | 14 - 17.5 |
| MgO | 5 - 8 |
| CaO | 1 - 4 |
| SrO | 5 - 8 |
| BaO | 0 - 3.5 |
| with MgO + CaO + SrO + BaO 15 - 17 | |
| ZrO₂ | 0.4 - 1.5 |
| TiO₂ | 0.4 - 1 |
| CeO₂ | 0.1 - 0.5 |
| SnO₂ | 0.2 - 1 |

2. Aluminoborosilicate glass according to Claim 1 which can be produced on a float system, **characterized in that**, apart from unavoidable impurities, it is free of arsenic oxide and antimony oxide.

3. Aluminosilicate glass according to Claim 1, **characterized in that** it also contains:
| | |
|---|---|
| As₂O₃ | 0 - 1.5 |
| Sb₂O₃ | 0 - 1.5 |
| Cl⁻ | 0 - 1.5 |
| F⁻ | 0 - 1.5 |
| SO₄²⁻ | 0 - 1.5 |
| with As₂O₃ +Sb₂O₃ + Cl⁻ + F⁻ + SO₄²⁻ ≤ 1.5 | |

4. Aluminoborosilicate glass according to at least one of Claims 1 to 3, which has a coefficient of thermal expansion α_{20/300} of between 3.5 and 3.8 x 10⁻⁶/K, a temperature at the viscosity 10^{14.5} dPas of at least 650°C, a temperature at the viscosity 10⁴ dPas of ≤ 1280°C, a density ρ of at most 2.60 g/cm³ and a weight loss of at most 1.0 mg/cm² after 24 hours of treatment in 5% strength hydrochloric acid at 95°C.

5. Use of the aluminoborosilicate glass according to at least one of Claims 1 to 4 as a substrate glass in display technology.

## Revendications

1. Verre aluminoborosilicaté exempt de métaux alcalins, qui présente la composition suivante (en % en poids sur base d'oxydes) :
| | |
|---|---|
| SiO₂ | 57 à 60 |
| B₂O₃ | 6,5 à 9,5 |
| Al₂O₃ | 14 à 17,5 |
| MgO | 5 à 8 |
| CaO | 1 à 4 |
| SrO | 5 à 8 |
| BaO | 0 à 3, 5 |
| avec MgO + CaO + SrO + BaO 15 à 17 | |
| ZrO₂ | 0,4 à 1,5 |
| TiO₂ | 0,4 à 1 |
| CeO₂ | 0,1 à 0,5 |
| SnO₂ | 0,2 à 1. |

2. Verre aluminoborosilicaté pouvant être fabriqué sur une installation de flottage selon la revendication 1, **caractérisé en ce qu'**il est exempt, à d'inévitables impuretés près, d'oxyde d'arsenic et d'oxyde d'antimoine.

3. Verre aluminosilicaté selon la revendication 1, **caractérisé en ce qu'**il contient en outre
| | |
|---|---|
| As₂O₃ | 0 à 1,5 |
| Sb₂O₃ | 0 à 1,5 |
| Cl⁻ | 0 à 1,5 |
| F⁻ | 0 à 1,5 |
| SO₄²⁻ | 0 à 1,5 |
| avec As₂O₃ + Sb₂O₃ + Cl⁻ + F⁻ + SO₄²⁻ ≤ 1,5. | |

4. Verre aluminoborosilicaté selon au moins l'une des revendications 1 à 3, qui présente un coefficient de dilatation thermique α_{20/300} entre 3,5 et 3,8x10⁻⁶/K, une température d'au moins 650°C à la viscosité de 10^{14,5} dPa·s, une température ≤ 1280°C à la viscosité de 10⁴ dPa·s, une densité p d'au maximum 2,60 g/cm³ et une perte de poids d'au maximum 1,0 mg/cm² après un traitement à 95°C pendant 24 heures dans de l'acide chlorhydrique à 5%.

5. Utilisation du verre aluminoborosilicaté selon au moins l'une des revendications 1 à 4 comme verre de substrat dans la technique d'affichage.
